# EUROPEAN PATENT APPLICATION

(11) **EP 1 775 314 A1**
(43) Date of publication of application: **18.04.2007**
(21) Application number: 05022297.5
(22) Date of filing: 13.10.2005
(51) Int. Cl.: C08G 18/12, C08G 18/48, C08G 18/42

(54) **An elastomer composition, a resin component, and a process for making a composite structure**

(71) Applicant: BASF Aktiengesellschaft, 67056 Ludwigshafen (DE); BASF CORPORATION, Florham Park, NJ 07932 (US)
(72) Inventor: Erickson, John, Southgate MI 48195 (US); Gust, Karl, Clawson MI 48017 (US); White, Walter R., Trenton MI 48183 (US)
(74) Representative: Karg, Jochen

(57) **Abstract**

An elastomer composition includes the reaction product of an isocyanate component and a resin component. The resin component includes an isocyanate-reactive component, a first chain extender, and a second chain extender. The isocyanate-reactive component has an actual functionality of greater than two, and the first chain extender has an actual functionality of two. The second chain extender, which is different from the first chain extender, has a structure:

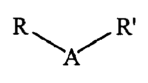

In this structure, A includes at least two alkyl chain groups. Each alkyl chain group has at least three carbon atoms, and is substantially free of pendent groups. R and R' are selected from the group of hydroxyl functional groups, amino functional groups, thiol functional groups, and combinations thereof. The elastomer composition has a combination of exceptional tear strength and tensile strength. The elastomer composition is used in a support layer of a composite structure. A process for making the composite structure includes providing a first layer that is a show surface of the composite structure, and providing the support layer.

## Description

### FIELD OF THE INVENTION

The present invention generally relates to an elastomer composition, a resin component, and a process for making a composite structure. More specifically, the elastomer composition and the resin component include a combination of isocyanate-reactive components and chain extenders that results in the resin component, and therefore, the elastomer composition having exceptional tear strength and tensile strength.

### BACKGROUND OF THE INVENTION

A recent trend in the automobile industry has been the use of conventional elastomer compositions and composite structures including the conventional elastomer compositions for decorative automotive components, including floor surfaces in trucks. Many of the composite structures include a show surface and a support layer. The support layer typically includes the conventional elastomer composition. The conventional elastomer composition is the reaction product of an isocyanate component and a resin component. The isocyanate and resin components of the conventional elastomer compositions, prior to reaction, are sufficiently fluid to enable spray application. The conventional elastomer compositions are based on mixtures of polyols and additives for obtaining the desired properties of the conventional elastomer composition. More specifically, the conventional elastomer compositions are required to have minimal tear strength and tensile strength. The conventional elastomer compositions are commercially available under the tradename Elastoskin^{®} from BASF Corporation of Mount Olive, NJ.

Support layers formed from conventional elastomer composition offer cost savings over other compositions used to form the support layer, such as polyvinyl chloride. However, the conventional elastomer compositions have marginal tear strength and tensile strength. To date, such conventional elastomer compositions have been developed that have tear strengths of up to 300 pli (pounds per linear inch), as tested in accordance with ASTM D624 Die T, or tensile strengths of up to 2500 psi (pounds per square inch), as tested in accordance with ASTM D624 standard die. Exceptional tear strengths and tensile strengths would exceed tear strengths of 300 pli and tensile strengths of 2500 psi. However, the elastomer compositions have not been developed to achieve a combination of both exceptional tear strength and tensile strength. Although other conventional elastomer compositions may have been developed that achieve exceptional tear strength and tensile strength, the components of the conventional elastomer compositions are too viscous, and thus not sprayable.

A number of related art references that attempt to modify the elastomer composition to improve tear strength or tensile strength of the elastomer composition are known. For example, United States Patent No. 4,841,007 (the '007 patent) discloses reacting a resin component including a first chain extender of 1,4-butane diol and a second chain extender of polytetramethylene glycol (PTMG), among other components, with a diisocyanate to produce an elastomer composition. A resulting structure of the elastomer composition is unbranched, straight-chain molecules, since neither the resin component nor the isocyanate component provide a functionality of greater than two. The elastomer composition has a tensile strength of 4445 psi and a tear strength of 257 pli. Although the '007 patent discloses the elastomer composition having the tensile strength that is exceptional, the tear strength is insufficient for many applications. The presence of other components in the resin component also makes the resin component too viscous to enable spraying of the resin component. Furthermore, support layers formed from the elastomer compositions are thermoplastic in nature because there is no chemical cross-linking, which results in a tacky surface texture, which is prone to collecting dirt and is difficult to work with.

Due to the deficiencies of the prior art, including those described above, it is desirable to provide a novel elastomer composition and a resin component that remains sufficiently fluid to enable spraying of the resin component, yet achieves a combination of exceptional tear strength and tensile strength. Furthermore, there remains an opportunity to provide a support layer formed from the elastomer composition that has a non-tacky surface texture. It is also desirable to provide a novel method of making a composite structure using the elastomer composition including the resin component.

### SUMMARY OF THE INVENTION

The subject invention provides an elastomer composition and a resin component for inclusion in the elastomer composition. The elastomer composition includes the reaction product of an isocyanate component, an isocyanate-reactive component, a first chain extender, and a second chain extender. The isocyanate-reactive component has an actual functionality of greater than two. The first chain extender has an actual functionality of two. The second chain extender is different from the first chain extender and has a structure: 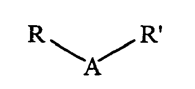 In this structure, A includes at least two alkyl chain groups. Each of the alkyl chain groups has at least three carbon atoms. Furthermore, the alkyl chain groups are substantially free of pendent groups. R and R' are selected from the group of hydroxyl functional groups, amino functional groups, thiol functional groups, and combinations thereof.

The subject invention also provides a process for making a composite structure. For the process, a first layer is provided that is a show surface of the composite structure. A support layer is provided that includes the elastomer composition as set forth above.

The resin component remains sufficiently fluid to enable spraying of the resin component. The support layer including the elastomer composition also has a non-tacky surface texture. Furthermore, the elastomer composition has a combination of exceptional tear strength and tensile strength, making the elastomer composition suitable for many applications requiring both exceptional tear strength and tensile strength.

### DETAILED DESCRIPTION OF A PREFERRED EMBODIMENT

The subject invention provides an elastomer composition, a resin component, and a process for making a composite structure including the elastomer composition. The composite structure, more specifically a support layer of the composite structure that includes the elastomer composition, has exceptional tear strength and tensile strength. The composite structure is generally used for applications requiring both exceptional tear strength and tensile strength, as well as an ultraviolet (UV) light stability. One particularly useful application for the composite structure is for floor surfaces in trucks.

The composite structure has a first layer and a support layer. The first layer is a show surface of the composite structure and is stable when exposed to UV light. Preferably, the first layer of the composite structure is formed of a paint. The paint may be a latex-based paint, a urethane-based paint, water-based paint, etc. Preferably, the first layer is applied to the support layer through an in-mold painting process. In a most preferred embodiment, the first layer is sprayed onto a surface of the mold prior to providing the support layer. The support layer is then provided in the mold, over the first layer.

As previously stated, the support layer is formed from the elastomer composition. In a preferred embodiment, the elastomer composition includes the reaction product of an isocyanate component and the resin component. The resin component includes an isocyanate-reactive component, a first chain extender, and a second chain extender. However, as described in further detail below, the isocyanate component may be reacted with the isocyanate-reactive component to produce a prepolymer. The prepolymer may then be reacted with the first and second chain extenders to produce the elastomer composition.

The resin component includes an isocyanate-reactive component that has an actual functionality of greater than two. The resin component further includes a first chain extender having an actual functionality of two and a second chain extender different from the first chain extender. The presence of the first chain extender in the elastomer composition results in the elastomer composition having excellent tensile strength. The second chain extender has a structure: 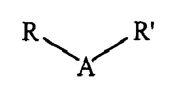 In this structure, A comprises at least two alkyl chain groups. Each alkyl chain group has at least three carbon atoms. Furthermore, each alkyl chain group is also substantially free of pendent groups. R and R' are selected from the group of hydroxyl functional groups, amino functional groups, thiol functional groups, and combinations thereof. The presence of the second chain extender in the elastomer composition results in the elastomer composition having exceptional flexibility. Furthermore, the presence of the second chain extender in combination with the first chain extender results in the elastomer composition having exceptional tear strength and tensile strength. More specifically, the elastomer composition has a combination of exceptional tear strength of at least 300 pli, as tested in accordance with ASTM D624 Die T, and exceptional tensile strength of at least 2500 psi, as tested in accordance with ASTM D624 standard die. More preferably, the elastomer composition has a combination of exceptional tear strength of at least 400 pli and exceptional tensile strength of at least 3000 psi.

Preferably, the isocyanate component is a diisocyanate for propagating chain growth in the elastomer composition. However, the isocyanate component may include polyisocyanates having more than two isocyanate groups which result in a branched structure in the elastomer composition when the isocyanate component reacts with the isocyanate-reactive component, the first chain extender, and the second chain extender. However, the functionality provided from the isocyanate-reactive component is sufficient to form the branched structure in the elastomer composition, which contributes to the excellent tear and tensile strength properties of the elastomer composition.

The isocyanate component generally corresponds to the formula R'(NCO)_{z} wherein R' is a polyfunctional organic chain and z is an integer which corresponds to the functionality of R' and is at least two. Preferably, R' includes an aromatic group, however, R' may also be an aliphatic group. Representative of the types of organic polyisocyanates contemplated herein include, for example, bis(3-isocyanatopropyl) ether, 1,4-diisocyanatobenzene, 1,3-diisocyanato-o-xylene, 1,3-diisocyanato-p-xylene, 1,3-diisocyanato-m-xylene, 2,4-diisocyanato-1-chlorobenzene, 2,4-diisocyanato-1-nitrobenzene, 2,5-diisochyanato-1-nitrobenzene, m-phenylene diisocyanate, p-phenylene diisocyanate, 2,4-toluene diisocyanate, 2,6-toluene diisocyanate, mixtures of 2,4- and 2,6-toluene diisocyanate, 1,5-naphthalene diisocyanate, 1-methoxy-2,4-phenylene diisocyanate, 4,4'-diphenylmethane diisocyanate, 2,4'-diphenylmethane diisocyanate, 4,4'-biphenylene diisocyanate, 3,3'-dimethyl-4,4'-diphenylmethane diisocyanate, and 3,3'-dimethyldiphenylmethane-4,4'-diisocyanate; the triisocyanates such as 4,4',4"-triphenylmethane triisocyanate; polymeric isocyanates such as polymethylene polyphenylene polyisocyanate and 2,4,6-toluene triisocyanate; and the tetraisocyanates such as 4,4'-dimethyl-2,2'-5,5'-diphenylmethane tetraisocyanate. Especially useful due to their availability and properties are toluene diisocyanate, 2,4'-diphenylmethane diisocyanate, 4,4'-diphenylmethane diisocyanate, polymethylene polyphenylene polyisocyanate, and mixtures thereof. Most preferably, the isocyanate component is selected from the group of diphenylmethane diisocyanates, carbodiimide-uretonimine modified diphenylmethane diisocyanates, quasi-prepolymers of such isocyanates, and combinations thereof. A specific example of a suitable isocyanate component is Lupranate^{®} MP-102 commercially available from BASF Corporation of Mount Olive, NJ.

The isocyanate component may be a modified multifunctional isocyanate, i.e., a product which is obtained through chemical reactions of the above diisocyanates and/or polyisocyanates. Examples include polyisocyanates containing the following groups: esters, ureas, biurets, allophanates, carbodiimides, uretonimines, isocyanurate and/or urethane groups containing diisocyanates and/or polyisocyanates. Individual examples are: aromatic polyisocyanates containing urethane groups, having NCO contents of from 8 to 33.6 weight percent, more preferably of from 18 to 25 weight percent, for example with diols, triols, oxyalkylene glycols, dioxyalkylene glycols, polyoxyalkyleneglycols, polyester polyols or polytetrahydrofuran having number average molecular weights up to 6000, modified 4,4'-diphenylmethanediisocyanate or toluenediisocyanate, whereby they are able to be employed individually or in mixtures as di- and/or polyoxyalkyleneglycols. Individual examples of the polyoxyalkyleneglycols include diethylene glycols, dipropylene glycols, polyoxyethylene glycols, polyoxypropylene glycols and polyoxypropylene polyoxethylene glycols. Preferable polyisocyanates contain liquid carbodiimide-uretonimine groups and/or isocyanurate rings, having NCO contents of from 8 to 33.6 weight percent, more preferably from 21 to 31 weight percent, for example, based on 4,4'-, 2,4'-, and/or 2,2'-diphenylmethane diisocyanate and/or 2,4- and/or 2,6-toluene diisocyanate and preferably 2,4- and 2,6-toluene diisocyanate, as well as the corresponding isomeric mixtures 4,4'-, 2,4'- and 2,2'-diphenylmethane diisocyanate, as well as the corresponding isomeric mixtures for example from 4,4'-and 2,4'-diphenylmethane diisocyanates; mixtures of diphenylmethane diisocyanates and polyphenyl polymethylene polyisocyanates (polymeric MDI) and mixtures of toluene diisocyanates and polymeric MDI. These polyisocyanates are prepared by reacting an excess of organic polyisocyanate or mixtures thereof with a minor amount of an active hydrogen-containing compound as determined by the well known Zerewitinoff test as described by Kohler in Journal of the American Chemical Society, 49, 3181 (1927).

The isocyanate component may include prepolymers having an NCO content of from 8 to 27 parts by weight based on the weight of the prepolymer. The prepolymers are prepared by the reaction of isocyanate-reactive compounds with an isocyanate. Preferably, the prepolymer is the reaction product of the isocyanate-reactive component and the isocyanates set forth above. Preferred isocyanates are selected from the group of diphenylmethane diisocyanates, carbodiimide-uretonimine modified diphenylmethane diisocyanates, and combinations thereof. The prepolymer is reactive with the resin component, more specifically the chain extenders with or without the isocyanate-reactive component, to produce the elastomer composition.

The elastomer composition has an isocyanate index of from 80 to 120, preferably from 90 to 110. The most preferred isocyanate index for the elastomer composition is from 95 to 105, wherein a 100 isocyanate index refers to an amount of the isocyanate component required for a stoichiometric ratio, and so on.

The first chain extender is preferably a "short" chain extender, i.e., a molecule having a functionality of two and a number average molecular weight of less than 116. The first chain extender, with the molecular weight less than 116, helps maintain the resin component sufficiently fluid to enable spraying. The first chain extender is reactive with the isocyanate component and, as stated above, results in the elastomer composition having exceptional tensile strength. More specifically, the first chain extender has functional groups that are reactive with the isocyanate component. Preferably, the functional groups are selected from the group of hydroxyl functional groups, amino functional groups, thiol functional groups, and combinations thereof. More preferably, the first chain extender is selected from the group of 1,3-propanediol, 1,2-butanediol, 1,3-butanediol, 1,4-butanediol, 2,3-butanediol, 1,2-pentanediol, 1,3-pentanediol, 1,4-pentanediol, 1,5-pentanediol, 2,3-pentanediol, 1,6-hexanediol, ethylenediamine, propylene diamine, 1,3-propanediamine, 1,2-butanediamine, 1,3-butanediamine, 1,4-butanediamine, 2,3-butanediamine, 1,2-pentanediamine, 1,3-pentanediamine, 1,4-pentanediamine, 1,5-pentanediamine, 2,3-pentanediamine, 1,6-hexanediamine, ethylene glycol, diethylene glycol, polyethylene glycols, propylene glycol, dipropylene glycol, ethylene dithiol, and combinations thereof.. In a most preferred embodiment, the first chain extender is 1,4-butane diol.

Preferably, the first chain extender is present in the resin component in an amount of at least 10 parts by weight based on the total weight of the resin component. More preferably, the first chain extender is present in an amount of from 10 to 25, most preferably from 12 to 18, parts by weight based on the total weight of the resin component, which results in the elastomer composition remaining sufficiently flexible while having the exceptional tensile strength.

The second chain extender is preferably a "long" chain extender, i.e., a molecule having a functionality of two and a number average molecular weight of at least 116, more preferably 1000. Preferably, the second chain extender has a melting point of less than 150°F, which also helps maintain the resin component sufficiently fluid to enable spraying. The second chain extender is also reactive with the isocyanate component and competes with the short chain extender during a reaction between the resin component and the isocyanate component. The resulting elastomer composition includes the short chain extender, the long chain extender, and, as will be discussed in further detail below, the isocyanate-reactive component randomly reacted with the isocyanate component. The second chain extender results in the elastomer composition having exceptional flexibility and tear strength by increasing a number average molecular weight of the elastomer composition.

As previously stated, the second chain extender includes at least two alkyl chain groups, with each alkyl chain group having at least three carbon atoms for increasing the number average molecular weight of the second chain extender, as opposed to elastomer compositions including second chain extenders having less than two alkyl chain groups and/or alkyl chain groups having less than three carbon atoms. The alkyl chain groups are also substantially free of pendant groups. More specifically, the alkyl chain groups are preferably straight, as opposed to branched, which promotes van der Waals bonding between molecules in the elastomer composition by allowing the alkyl chain groups to align with each other between adjacent molecular chains within the elastomer composition. The van der Waals bonding is partially responsible for the elastomer composition having exceptional flexibility and tear strength.

Preferably, the alkyl chain groups are selected from the group of alkylenes, alkoxides, ethers, carboxylates, aminyls, amines, amidyls, amides, and combinations thereof. In a preferred embodiment, the at least two alkyl chain groups in A each have the same amount of carbon atoms for creating a substantially uniform structure in A, which further allows the alkyl chain groups to align with each other between adjacent molecular chains within the elastomer composition. The "substantially uniform structure" refers to a structure that has repeating units, such as a polymer. However, the substantially uniform structure may also include non-repeating units without materially affecting the van der Waals bonding between the second chain extender and adjacent molecular chains within the elastomer composition. Furthermore, the non-repeating units in the second chain extender may also include pendant groups without materially affecting the van der Waals bonding between the second chain extender and adjacent molecular chains within the elastomer composition. Preferably, A includes the at least two alkyl chain groups in an amount of at least 90 parts by mole based on 100 parts by mole of A, regardless of whether or not the alkyl chain groups have the same amount of carbon atoms.

As previously set forth, the second chain extender also includes R and R', which are functional groups that are reactive with isocyanate groups and enable the second chain extender to react with the isocyanate component. Preferably R and R' are both hydroxyl functional groups, however, any of the aforementioned groups are suitable, in any combination.

In one preferred embodiment, the second chain extender is polytetrahydrofuran. As such, the at least two alkyl chain groups in A of the polytetrahydrofuran are both butylene oxide, and R and R' are both hydroxyl groups. Furthermore, A may include additional butylene oxide molecules. Preferably, the polytetrahydrofuran has a number average molecular weight of at least 250 and an OH value of from 56 to 450 mg KOH/g. An example of a polytetrahydrofuran suitable for the subject invention is PolyTHF^{®} Polyether Diol 2000 commercially available from BASF Corporation.

In another preferred embodiment, the second chain extender is polycaprolactone. As such, the at least two alkyl chain groups in A of the polycaprolactone are both 1-carboxyhexyl groups, and R and R' are both hydroxyl groups. Furthermore, A may include additional 1-carboxyhexyl groups. Preferably, the polycaprolactone has a number average molecular weight of at least 250 and an OH value of from 56 to 450 mg KOH/g. An example of a polycaprolactone suitable for the subject invention is Tone^{®} 1231 Polyol commercially available from Dow Chemical Company of Midland, MI.

Preferably, the second chain extender is present in the resin component in an amount of at least 5 parts by weight based on the total weight of the resin component for resulting in the elastomer composition having the exceptional tear strength and tensile strength. More preferably, the second chain extender is present in an amount of from 15 to 80, most preferably from 30 to 80, parts by weight based on the total weight of the resin component.

The isocyanate-reactive component that is present in the resin component is different from both the first chain extender and the second chain extender and serves a different function from both the first chain extender and the second chain extender. As previously stated, the isocyanate-reactive component has a functionality of greater than two. The isocyanate-reactive component, by providing the actual functionality of greater than two to the elastomer composition, may include isocyanate-reactive components all having three or more functional groups, or may include a mixture of isocyanate-reactive components that have three or more functional groups and isocyanate-reactive components that have two functional groups. The isocyanate-reactive components that have three or more functional groups have the branched structure, as opposed to isocyanate-reactive components that have two functional groups, which generally have a straight structure. The isocyanate-reactive components having the branched structure are reactive with the isocyanate component to further propagate the branched structure. The branched structure contributes to the exceptional tear strength and tensile strength of the elastomer composition and formation of a thermoset polymer matrix. The thermoset polymer matrix has a non-tacky surface texture.

Preferably, the isocyanate-reactive component is selected from the group of polyols, polyamines, and combinations thereof that are reactive with the isocyanate component, along with the first chain extender and the second chain extender. Preferred isocyanate-reactive components have three or more functional groups for providing the branched structure to contribute to the exceptional tear strength and tensile strength of the elastomer composition. In a most preferred embodiment, the isocyanate-reactive component is selected from the group of trimethylol propane-initiated polyether polyols, glycerin-intitiated polyether polyols, and combinations thereof. An example of an isocyanate-reactive component suitable for the subject invention is Pluracol^{®} P-380 Polyether polyol commercially available from BASF Corporation. Other suitable isocyanate-reactive components include Pluracol^{®} 816, Pluracol^{®} 538, Pluracol^{®} 1421, Polyetheramine T5000, and combinations thereof, all commercially available from BASF Corporation.

Preferably, the isocyanate-reactive component is present in the resin component. However, as mentioned above, the isocyanate-reactive component may be reacted with the isocyanate component to produce the prepolymer. The prepolymer may then be reacted with the resin component to produce the elastomer composition. Preferably, the isocyanate-reactive component is present in the resin component in an amount of at least 5 parts by weight based on the total weight of the resin component. More preferably, the isocyanate-reactive component is present in the resin component in an amount of from 12 to 65, most preferably from 12 to 30, parts by weight based on the total weight of the resin component.

In one embodiment, the resin component further includes a third chain extender, which is also a short chain extender. The third chain extender is different from the first chain extender, which results in the elastomer composition having increased tensile strength, as opposed to the elastomer composition with only the first chain extender. The third chain extender is preferably 2-methyl-1,3-dihydroxypropane, but may be any short chain extender that is different from the first chain extender. An example of a third chain extender suitable for the subject invention is NIAX^{®} DP-1022 Processing Additive from Crompton Corporation of Middlebury, Connecticut.

Preferably, the first chain extender, the second chain extender, and the third chain extender are present in the resin component in a total amount of at least 25, more preferably 40 to 91, parts by weight based on the total weight of the resin component for resulting in the elastomer composition having the exceptional tear strength and tensile strength. In a most preferred embodiment, the first chain extender, the second chain extender, and the third chain extender are present in the resin component in an amount of from 70 to 79 parts by weight based on the total weight of the resin component.

The resin component may further include additional components, such as catalysts, surfactants, compatibilizing agents, supplemental cross-linking agents, flame retardants, moisture scavengers, anti-foam agents, UV performance enhancers, hindered amine light stabilizers, pigments, and combinations thereof. Preferably, the resin component includes a catalyst selected from the group of metal-based catalysts, amine-based catalysts, and combinations thereof. Examples of specific catalysts suitable for the subject invention include DABCO^{®} NE 1060, commercially available from Air Products and Chemicals of Allentown, Pennsylvania and Fomrez^{®} UL-22 commercially available from Uniroyal Chemical Company of Middlebury, Connecticut.

### EXAMPLES

The following examples, illustrating the components of the elastomer composition, are intended to illustrate and not to limit the invention. The amounts set forth in these examples are by weight, unless otherwise indicated.

Specific examples of the elastomer composition are produced by reacting the isocyanate component with the resin component. The resin component includes the isocyanate-reactive component, the first chain extender, the second chain extender, and, optionally, the third chain extender. In addition, a comparative example is shown for comparing the tear strength and tensile strength properties to the examples of the subject invention.

The examples are made by first preparing the resin component. The resin component is prepared by blending the isocyanate-reactive component, the first chain extender, the second chain extender, the catalysts, and the additives at a temperature above room temperature of 77°F, and then allowing the resin component to cool for 30 minutes back to room temperature of 77°F. The isocyanate component and the resin component are then mixed to produce a mixture. The resulting mixture is blended for 25 seconds before pouring the mixture onto a flat plate that is heated to a temperature of 155°F to produce the elastomer composition. It is to be appreciated that the spraying may be used to apply the mixture, as opposed to pouring. The elastomer composition remains on the flat plate for 5 minutes, after which the elastomer composition is heat aged for 70 hours at 158°F. Specific amounts and compositions are set forth in Table 1, as well as tear strength and tensile strength for each example.

**Table 1A**

| | Component | Comp Ex. (Prior Art) | Ex. A | Ex. B |
|---|---|---|---|---|
| Resin Component | | | | |
| | Polyol A | 41.96 | 0.00 | 0.00 |
| | Polyol B | 29.30 | 18.99 | 18.23 |
| | First Chain Extender | 11.09 | 15.24 | 16.99 |
| | Second Chain Extender A | 0.00 | 57.20 | 0.00 |
| | Second Chain Extender B | 0.00 | 0.00 | 54.92 |
| | Second Chain Extender C | 0.00 | 0.00 | 0.00 |
| | Second Chain Extender D | 0.00 | 0.00 | 0.00 |
| | Third Chain Extender | 15.84 | 2.52 | 4.06 |
| | Catalyst A | 0.16 | 0.00 | 0.00 |
| | Catalyst B | 0.79 | 0.00 | 0.00 |
| | Catalyst C | 0.00 | 0.03 | 0.03 |
| | Catalyst D | 0.00 | 0.85 | 0.81 |
| | Additive A | 0.79 | 0.85 | 0.81 |
| | Additive B | 0.08 | 0.09 | 0.08 |
| | Additive C | 0.00 | 4.23 | 4.07 |
| | Total | 100.00 | 100.00 | 100.00 |

| Isocyanate Component | Isocyanate, amount by weight based on 100 parts by weight of the Resin Component | 124.54 | 102.18 | 103.06 |
|---|---|---|---|---|
| | NCO % | 22.9 | 22.9 | 22.9 |
| | Isocyanate Index | 105 | 95 | 95 |
| | Total | 124.54 | 102.18 | 103.06 |
| | Tear Strength, pli | 264 | 513 | 648 |
| | Tensile Strength, psi | 3306 | 3489 | 3151 |

**Table 1B**

| | Component | Ex. C | Ex. D |
|---|---|---|---|
| Resin Component | | | |
| | Polyol A | 0.00 | 0.00 |
| | Polyol B | 18.23 | 12.70 |
| | First Chain Extender | 16.99 | 17.78 |
| | Second Chain Extender A | 0.00 | 0.00 |
| | Second Chain Extender B | 0.00 | 0.00 |
| | Second Chain Extender C | 54.93 | 0.00 |
| | Second Chain Extender D | 0.00 | 63.48 |
| | Third Chain Extender | 4.06 | 0.00 |
| | Component | Ex. C | Ex. D |
| | Catalyst A | 0.00 | 0.00 |
| | Catalyst B | 0.00 | 0.00 |
| | Catalyst C | 0.03 | 0.03 |
| | Catalyst D | 0.81 | 0.85 |
| | Additive A | 0.81 | 0.85 |
| | Additive B | 0.08 | 0.08 |
| | Additive C | 4.06 | 4.23 |
| | Total | 100.00 | 100.00 |

| Isocyanate Component | Isocyanate, amount by weight based on 100 parts by weight of the Resin Component | 93.55 | 88.63 |
|---|---|---|---|
| | NCO % | 22.90 | 22.90 |
| | Isocyanate Index | 95 | 95 |
| | Total | 93.55 | 88.63 |
| | Tear Strength, pli | 532 | 748 |
| | Tensile Strength, psi | 3328 | 3823 |

Polyol A is a dipropylene glycol-initiated polyether polyol, including propylene oxide and ethylene oxide, and having an actual functionality of 1.8 and a hydroxyl number of 29 mg KOH/g, commercially available from BASF Corporation.

Polyol B is a trimethylol propane-initiated polyether polyol, including propylene oxide and ethylene oxide, and having an actual functionality of 2.29 and a hydroxyl number of 25 mg KOH/g, commercially available from BASF Corporation.

First Chain Extender is 1,4-butane diol.

Second Chain Extender A is polytetrahydrofuran having a number average molecular weight of about 650 +/- 25 and a hydroxyl number of from 166.2 to 179.5, commercially available from BASF Corporation.

Second Chain Extender B is polytetrahydrofuran having a number average molecular weight of about 1000 +/- 50 and a hydroxyl number of from 106.9 to 118.1, commercially available from BASF Corporation.

Second Chain Extender C is polytetrahydrofuran having a number average molecular weight of about 2000 +/- 50 and a hydroxyl number of from 54.7 to 57.5, commercially available from BASF Corporation.

Second Chain Extender D is polycaprolactone having a number average molecular weight of about 1250 and a hydroxyl number of about 89.8, commercially available from Dow Chemical Company.

Third Chain Extender is 2-methyl-1,3-propane diol.

Catalyst A is a non-hydrolyzable, temperature-activated catalyst based on 1,8 diaza-bicyclo (5,4,0) undecene-7, commercially available from Air Products and Chemicals.

Catalyst B is a catalyst based on an amine commercially available from Air Products and Chemicals.

Catalyst C is a catalyst based on dibutyltin mercaptide commercially available from Uniroyal Chemical Company.

Catalyst D is a cell-opening gel catalyst commercially available from Air Products and Chemicals.

Additive A is a moisture scavenger that is a combination of sodium aluminasilicate and potassium aluminasilicate, commercially available from UOP LLC.

Additive B is a silicone defoamer.

Additive C is black pigment paste.

Isocyanate is a prepolymer including 87.0 weight percent diphenylmethane diisocyanate, 8.0 weight percent dipropylene glycol, 4.8 weight percent polyether diol and having a percent NCO of 23, commercially available from BASF Corporation.

The invention has been described in an illustrative manner, and it is to be understood that the terminology which has been used is intended to be in the nature of words of description rather than of limitation. Obviously, many modifications and variations of the present invention are possible in light of the above teachings, and the invention may be practiced otherwise than as specifically described.

## Claims

1. A resin component comprising:
an isocyanate-reactive component having an actual functionality of greater than two;
a first chain extender having an actual functionality of two; and
a second chain extender different from said first chain extender and having a structure: 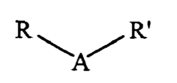
wherein
A comprises at least two alkyl chain groups with each alkyl chain group having at least three carbon atoms and being substantially free of pendent groups; and
R and R' are selected from the group of hydroxyl functional groups, amino functional groups, thiol functional groups, and combinations thereof.

2. A resin component as set forth in claim 1 wherein said alkyl chain groups are selected from the group of alkylenes, alkoxides, ethers, carboxylates, aminyls, amines, amidyls, amides, and combinations thereof.

3. A resin component as set forth in claim 1 wherein said at least two alkyl chain groups in A each have the same amount of carbon atoms for creating a substantially uniform structure in A.

4. A resin component as set forth in claim 3 wherein said at least two alkyl chain groups in A comprise at least 90 parts by mole of A based on 100 parts by mole of A.

5. A resin component as set forth in claim 3 wherein said second chain extender comprises polytetrahydrofuran.

6. A resin component as set forth in claim 5 wherein said polytetrahydrofuran has a number average molecular weight of at least 250.

7. A resin component as set forth in claim 5 wherein said polytetrahydrofuran has an OH value of from 56 to 450 mg KOH/g.

8. A resin component as set forth in claim 3 wherein said second chain extender comprises polycaprolactone.

9. A resin component as set forth in claim 8 wherein said polycaprolactone has a number average molecular weight of at least 250.

10. A resin component as set forth in claim 8 wherein said polycaprolactone has an OH value of from 56 to 450 mg KOH/g.

11. A resin component as set forth in claim 1 wherein said second chain extender is present in said resin component in an amount of at least 5 parts by weight based on the total weight of said resin component.

12. A resin component as set forth in claim 1 wherein said isocyanate-reactive component is selected from the group of polyols, polyamines, and combinations thereof.

13. A resin component as set forth in claim 12 wherein said isocyanate-reactive component is selected from the group of trimethylol propane-initiated polyether polyols, glycerine-initiated polyether polyols, and combinations thereof.

14. A resin component as set forth in claim 1 wherein said isocyanate-reactive component is present in said resin component in an amount of at least 5 parts by weight based on the total weight of said resin component.

15. A resin component as set forth in claim 1 wherein said first chain extender has functional groups selected from the group of hydroxyl functional groups, amino functional groups, thiol functional groups, and combinations thereof.

16. A resin component as set forth in claim 15 wherein said first chain extender is selected from the group of 1,3-propanediol, 1,2-butanediol, 1,3-butanediol, 1,4-butanediol, 2,3-butanediol, 1,2-pentanediol, 1,3-pentanediol, 1,4-pentanediol, 1,5-pentanediol, 2,3-pentanediol, 1,6-hexanediol, ethylenediamine, propylene diamine, 1,3-propanediamine, 1,2-butanediamine, 1,3-butanediamine, 1,4-butanediamine, 2,3-butanediamine, 1,2-pentanediamine, 1,3-pentanediamine, 1,4-pentanediamine, 1,5-pentanediamine, 2,3-pentanediamine, 1,6-hexanediamine, ethylene glycol, diethylene glycol, polyethylene glycols, propylene glycol, dipropylene glycol, ethylene dithiol, and combinations thereof.

17. A resin component as set forth in claim 1 wherein said first chain extender is present in said resin component in an amount of at least 10 parts by weight based on the total weight of said resin component.

18. A resin component as set forth in claim 1 further comprising a third chain extender.

19. A resin component as set forth in claim 18 wherein said third chain extender comprises 2-methyl-1,3-dihydroxypropane.

20. A resin component as set forth in claim 18 wherein said second chain extender is present in said resin component in an amount of at least 5 parts by weight based on the total weight of said resin component.

21. A resin component as set forth in claim 20 wherein said first chain extender, said second chain extender, and said third chain extender are present in said resin component in a total amount of from 70 to 79 parts by weight based on the total weight of said resin component.

22. A resin component as set forth in claim 1 further comprising a catalyst selected from the group of metal-based catalysts, amine-based catalysts, and combinations thereof.

23. A resin component as set forth in claim 1 further comprising at least one additive selected from the group of surfactants, compatibilizing agents, supplemental cross-linking agents, flame retardants, moisture scavengers, anti-foam agents, UV performance enhancers, hindered amine light stabilizers, pigments, and combinations thereof.

24. An elastomer composition comprising the reaction product of:
an isocyanate component;
an isocyanate-reactive component having an actual functionality of greater than two;
a first chain extender having an actual functionality of two; and
a second chain extender different from said first chain extender and having a structure: 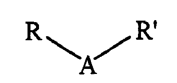
wherein
A comprises at least two alkyl chain groups with each of said alkyl chain groups having at least three carbon atoms and being substantially free of pendent groups; and
R and R' are selected from the group of hydroxyl functional groups, amino functional groups, thiol functional groups, and combinations thereof.

25. An elastomer composition as set forth in claim 24 wherein said alkyl chain groups are selected from the group of alkylenes, alkoxides, ethers, carboxylates, aminyls, amines, amidyls, amides, and combinations thereof.

26. An elastomer composition as set forth in claim 24 wherein said at least two alkyl chain groups in A each have the same amount of carbon atoms for creating a substantially uniform structure in A.

27. An elastomer composition as set forth in claim 26 wherein said at least two alkyl chain groups in A comprise at least 90 parts by mole of A based on 100 parts by mole of A.

28. An elastomer composition as set forth in claim 26 wherein said second chain extender comprises polytetrahydrofuran.

29. An elastomer composition as set forth in claim 28 wherein said polytetrahydrofuran has a number average molecular weight of at least 250.

30. An elastomer composition as set forth in claim 28 wherein said polytetrahydrofuran has an OH value of from 56 to 450 mg KOH/g.

31. An elastomer composition as set forth in claim 26 wherein said second chain extender comprises polycaprolactone.

32. An elastomer composition as set forth in claim 31 wherein said polycaprolactone has a number average molecular weight of at least 250.

33. An elastomer composition as set forth in claim 24 wherein said isocyanate-reactive component is selected from the group of polyols, polyamines, and combinations thereof.

34. An elastomer composition as set forth in claim 33 wherein said isocyanate-reactive component is selected from the group of trimethylol propane-initiated polyether polyols, glycerine-initiated polyether polyols, and combinations thereof.

35. An elastomer composition as set forth in claim 24 wherein said isocyanate component is selected from the group of diphenylmethane diisocyanates, carbodiimide-uretonimine modified diphenylmethane diisocyanates, and combinations thereof.

36. An elastomer composition as set forth in claim 24 wherein said isocyanate component comprises a prepolymer that is the reaction product of said isocyanate-reactive component and an isocyanate selected from the group of diphenylmethane diisocyanates, carbodiimide-uretonimine modified diphenylmethane diisocyanates, and combinations thereof.

37. An elastomer composition as set forth in claim 24 having an isocyanate index of from 80 to 120.

38. An elastomer composition as set forth in claim 24 wherein said first chain extender is selected from the group of 1,3-propanediol, 1,2-butanediol, 1,3-butanediol, 1,4-butanediol, 2,3-butanediol, 1,2-pentanediol, 1,3-pentanediol, 1,4-pentanediol, 1,5-pentanediol, 2,3-pentanediol, 1,6-hexanediol, ethylenediamine, propylene diamine, 1,3-propanediamine, 1,2-butanediamine, 1,3-butanediamine, 1,4-butanediamine, 2,3-butanediamine, 1,2-pentanediamine, 1,3-pentanediamine, 1,4-pentanediamine, 1,5-pentanediamine, 2,3-pentanediamine, 1,6-hexanediamine, ethylene glycol, diethylene glycol, polyethylene glycols, propylene glycol, dipropylene glycol, ethylene dithiol, and combinations thereof.

39. An elastomer composition as set forth in claim 24 further comprising a third chain extender.

40. An elastomer composition as set forth in claim 39 wherein said third chain extender comprises 2-methyl-1,3-dihydroxypropane.

41. An elastomer composition as set forth in claim 24 further comprising a catalyst selected from the group of metal-based catalysts, amine-based catalysts, and combinations thereof.

42. An elastomer composition as set forth in claim 24 further comprising at least one additive selected from the group of surfactants, compatibilizing agents, supplemental cross-linking agents, flame retardants, moisture scavengers, anti-foam agents, UV performance enhancers, hindered amine light stabilizers, pigments, and combinations thereof.

43. An elastomer composition as set forth in claim 24 having a tensile strength of at least 300 pli.

44. An elastomer composition as set forth in claim 43 having a tensile strength of at least 2500 psi.

45. A process for making a composite structure, said process comprising the steps of:
providing a first layer that is a show surface of the composite structure;
providing a support layer including an elastomer composition that comprises the reaction product of:
an isocyanate component;
an isocyanate-reactive component having an actual functionality of greater than two;
a first chain extender having an actual functionality of two; and
a second chain extender different from said first chain extender and having a structure: 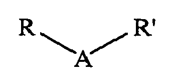
wherein
A comprises at least two alkyl chain groups with each of said alkyl chain groups having at least three carbon atoms and being substantially free of pendent groups; and
R and R' are selected from the group of hydroxyl functional groups, amino functional groups, thiol functional groups, and combinations thereof.

46. A process as set forth in claim 45 wherein said second chain extender is present in an amount of at least 5 parts by weight based on the total weight of said resin component.

47. A process as set forth in claim 45 wherein said isocyanate-reactive component is present in an amount of at least 5 parts by weight based on the total weight of said resin component.

48. A process as set forth in claim 45 wherein said first chain extender is present in an amount of at least 10 parts by weight based on the total weight of said resin component.

49. A process as set forth in claim 45 further comprising a third chain extender.

50. A process as set forth in claim 49 wherein said second chain extender is present in said resin component in an amount of at least 5 parts by weight based on the total weight of said resin component.

51. A process as set forth in claim 50 where said first chain extender, said second chain extender, and said third chain extender are present in said resin component in a total amount of from 70 to 79 parts by weight based on the total weight of said resin component.

52. A process as set forth in claim 45 wherein said elastomer composition has an isocyanate index of from 80 to 120.

## Amended claims

### Amended claims in accordance with Rule 86(2) EPC.

**1.** A compact elastomer composition comprising the reaction product of:
an isocyanate component;
an isocyanate-reactive component having an actual functionality of greater than two;
a first chain extender having an actual functionality of two; and
a second chain extender different from said first chain extender and having a structure: 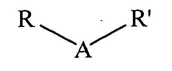
wherein
A comprises at least two alkylene units with each of said alkylene units having at least three carbon atoms and being substantially free of pendent groups; and
R and R' are selected from the group of hydroxyl functional groups, amino functional groups, thiol functional groups, and combinations thereof.

**2.** A compact elastomer composition as set forth in claim 1 wherein said alkylene units are selected from the group of alkylenes, alkoxides, ethers, carboxylates, aminyls, amines, amidyls, amides, and combinations thereof.

**3.** A compact elastomer composition as set forth in claim 1 wherein said at least two alkylene units in A each have the same amount of carbon atoms for creating a substantially uniform structure in A.

**4.** A compact elastomer composition as set forth in claim 3 wherein said at least two alkylene units in A comprise at least 90 parts by mole of A based on 100 parts by mole of A.

**5.** A compact elastomer composition as set forth in claim 3 wherein said second chain extender comprises polytetrahydrofuran.

**6.** A compact elastomer composition as set forth in claim 5 wherein said polytetrahydrofuran has a number average molecular weight of at least 250.

**7.** A compact elastomer composition as set forth in claim 5 wherein said polytetrahydrofuran has an OH value of from 56 to 450 mg KOH/g.

**8.** A compact elastomer composition as set forth in claim 3 wherein said second chain extender comprises polycaprolactone.

**9.** A compact elastomer composition as set forth in claim 8 wherein said polycaprolactone has a number average molecular weight of at least 250.

**10.** A compact elastomer composition as set forth in claim 1 wherein said isocyanate-reactive component is selected from the group of polyols, polyamines, and combinations thereof.

**11.** A compact elastomer composition as set forth in claim 10 wherein said isocyanate-reactive component is selected from the group of trimethylol propane-initiated polyether polyols, glycerine-initiated polyether polyols, and combinations thereof.

**12.** A compact elastomer composition as set forth in claim 1 wherein said isocyanate component is selected from the group of diphenylmethane diisocyanates, carbodiimide-uretonimine modified diphenylmethane diisocyanates, and combinations thereof.

**13.** A compact elastomer composition as set forth in claim 1 wherein said isocyanate component comprises a prepolymer that is the reaction product of said isocyanate-reactive component and an isocyanate selected from the group of diphenylmethane diisocyanates, carbodiimide-uretonimine modified diphenylmethane diisocyanates, and combinations thereof.

**14.** A compact elastomer composition as set forth in claim 1 having an isocyanate index of from 80 to 120.

**15.** A compact elastomer composition as set forth in claim 1 wherein said first chain extender is selected from the group of 1,3-propanediol, 1,2-butanediol, 1,3-butanediol, 1,4-butanediol, 2,3-butanediol, 1,2-pentanediol, 1,3-pentanediol, 1,4-pentanediol, 1,5-pentanediol, 2,3-pentanediol, 1,6-hexanediol, ethylenediamine, propylene diamine, 1,3-propanediamine, 1,2-butanediamine, 1,3-butanediamine, 1,4-butanediamine, 2,3-butanediamine, 1,2-pentanediamine, 1,3-pentanediamine, 1,4-pentanediamine, 1,5-pentanediamine, 2,3-pentanediamine, 1,6-hexanediamine, ethylene glycol, diethylene glycol, polyethylene glycols, propylene glycol, dipropylene glycol, ethylene dithiol, and combinations thereof.

**16.** A compact elastomer composition as set forth in claim 1 further comprising a third chain extender.

**17.** A compact elastomer composition as set forth in claim 16 wherein said third chain extender comprises 2-methyl-1,3-dihydroxypropane.

**18.** A compact elastomer composition as set forth in claim 1 further comprising a catalyst selected from the group of metal-based catalysts, amine-based catalysts, and combinations thereof.

**19.** A compact elastomer composition as set forth in claim 1 further comprising at least one additive selected from the group of surfactants, compatibilizing agents, supplemental cross-linking agents, flame retardants, moisture scavengers, antifoam agents, UV performance enhancers, hindered amine light stabilizers, pigments, and combinations thereof.

**20.** A compact elastomer composition as set forth in claim 1 having a tensile strength of at least 300 pli (52,5 N/mm).

**21.** A compact elastomer composition as set forth in claim 20 having a tensile strength of at least 2500 psi (17237 KPa).

**22.** A process for making a composite structure, said process comprising the steps of:
providing a first layer that is a show surface of the composite structure;
providing a support layer including a compact elastomer composition that comprises the reaction product of:
an isocyanate component;
an isocyanate-reactive component having an actual functionality of greater than two;
a first chain extender having an actual functionality of two; and
a second chain extender different from said first chain extender and having a structure: 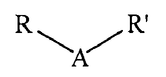
wherein
A comprises at least two alkylene units with each of said alkylene units having at least three carbon atoms and being substantially free of pendent groups; and
R and R' are selected from the group of hydroxyl functional groups, amino functional groups, thiol functional groups, and combinations thereof.

**23.** A process as set forth in claim 22 wherein said second chain extender is present in an amount of at least 5 parts by weight based on the total weight of said resin component.

**24.** A process as set forth in claim 22 wherein said isocyanate-reactive component is present in an amount of at least 5 parts by weight based on the total weight of said resin component.

**25.** A process as set forth in claim 22 wherein said first chain extender is present in an amount of at least 10 parts by weight based on the total weight of said resin component.

**26.** A process as set forth in claim 22 further comprising a third chain extender.

**27.** A process as set forth in claim 26 wherein said second chain extender is present in said resin component in an amount of at least 5 parts by weight based on the total weight of said resin component.

**28.** A process as set forth in claim 27 where said first chain extender, said second chain extender, and said third chain extender are present in said resin component in a total amount of from 70 to 79 parts by weight based on the total weight of said resin component.

**29.** A process as set forth in claim 22 wherein said elastomer composition has an isocyanate index of from 80 to 120.
